# EUROPEAN PATENT APPLICATION

(11) **EP 2 487 948 A1**
(43) Date of publication of application: **15.08.2012**
(21) Application number: 11193866.8
(22) Date of filing: 15.12.2011
(51) Int. Cl.: H04W 12/08, H04W 48/16

(54) **System and method for managing access to a communication network**

(30) Priority: 11.02.2011 US 201161441935 P
(71) Applicant: Research In Motion Limited, Waterloo, ON N2L 3W8 (CA)
(72) Inventor: Ryerson, Christopher Maybee, Ottawa, Ontario K2K 3K1 (CA); Montemurro, Michael Peter, Mississauga, Ontario L4W OB5 (CA)
(74) Representative: Keane, Paul Fachtna

(57) **Abstract**

The disclosure recites a system and method for selecting a client device for a server device managing communications for a wireless network. The method comprises: identifying a set of wireless devices that are communicating in the network; and identifying a set of client of devices in the set of wireless devices to communicate with the network through the server device by evaluating members in the set wireless for their communication characteristics for the network.

## Description

### FIELD OF DISCLOSURE

The disclosure provided herein describes generally a system and method of managing access to a communication network. In particular, management of when, and if, a device (and subsequent devices) can access a wireless local area network is provided.

### BACKGROUND OF DISCLOSURE

Wireless mobile communication devices perform a variety of functions to enable mobile users to stay organized and in contact with others in a communication network through e-mail, schedulers and address books. Wireless devices are designed to enter and leave different wireless networks.

Wireless networks utilize communication hubs to communicate with the wireless devices. Some hubs provide access points to their networks. Hubs may be wireless or wired. Management of access to the wireless network can be controlled through the hubs. When a new device wishes to access the network through the hub, different access protocols may be provided, including a requirement that the new device be authenticated with the network. Authentication may be provided through a user identification (userid) and password. Passwords can be cumbersome to manage for the hub and / or devices.

There is a need for a system and method which addresses deficiencies in the prior art.

### BRIEF DESCRIPTION OF THE DRAWINGS

Embodiments of the invention will now be described, by way of example only, with reference to the accompanying drawings, in which:

Fig. 1 is a schematic diagram of a wireless communication network having a wireless access point communicating with a wireless electronic communication device according to an embodiment;

Fig. 2 is a schematic representation of the wireless access point device of Fig. 1 implementing connection algorithms according to an embodiment;

Fig. 3A is a flowchart of exemplary processes executed by a first algorithm in a device providing the access point of Fig. 2 in regulating a client access to its network according to an embodiment;

Fig. 3B is a flowchart of exemplary processes executed by a second algorithm in a device providing the access point of Fig. 2 in allowing a client connection according to an embodiment;

Fig. 3C is a flowchart of exemplary processes executed by a third algorithm in a device providing the access point of Fig. 2 in regulating client access according to an embodiment;

Fig. 4A is a snapshot of exemplary graphical user interfaces (GUls) that are generated on a display of a device providing the access point of Fig. 2 in managing connection requests according to an embodiment;

Fig. 4B is a snapshot of one GUI of the GUIs in Fig. 4A that allows regulation of devices accessing the network according to an embodiment; and

Fig. 5 is a block diagram of certain internal components of the device of Fig. 2.

### DESCRIPTION OF EMBODIMENTS

Exemplary details of embodiments are provided herein. The description which follows and the embodiments described therein are provided by way of illustration of an example or examples of particular embodiments of principles of the present disclosure. These examples are provided for the purposes of explanation and not limitation of those principles and of the disclosure. In the description which follows, like parts are marked throughout the specification and the drawings with the same respective reference numerals.

Generally, an embodiment provides a system and method for managing access to a network (wireless or wired) for a set of client devices and potential client devices seeking access to a given server in a communication network.

In a first aspect, a method of managing access requests to a network from a client device received by a server device is provided. The method comprises: setting an access parameter for accessing the network to a first setting; evaluating access requests to the network received by the server device using the first setting; and upon detection of a triggering event, changing the access parameter to a second setting.

In the method, the network may be an 802.11 class network; and the server device may be a wireless device.

In the method, the first setting may allow access to the network without requiring that a password be provided by the client device.

In the method, when evaluating the access requests, the server device may grant the device access to the network regardless of authentication data provided by the device to the server. As such, the authentication data may be received, but ignored (i.e. not processed or evaluated) by the device.

In the method, the second setting may not allow an additional device to access the network through the server device. As such, the setting may prohibit the additional device from accessing the network. The prohibition setting may be fixed for the second setting until a reset of the server device is performed.

In the method, the second setting may evaluate a password provided as part of a subsequent access request from the client device requesting access to the network through the server device.

In the method, the triggering event may be reaching a predetermined limit of client devices accessing the network through the server device.

In the method, the triggering event may be reaching of an elapsed time from when the first setting was set.

In the method, setting the access parameter to the first setting may comprise changing the access parameter from a previous setting to the first setting.

In a second aspect, a method of managing access requests to a network from a client device received by a server device is provided. The method comprises: changing an access parameter for accessing the network from a current setting to a first setting; evaluating access requests to the network received by the server device using the first setting; and upon detection of a triggering event, changing the access parameter to a second setting.

In the method, the network may be an 802.11 class network; and the server device may be a wireless device.

In the method, when evaluating the access requests, the server device may grant the device access to the network regardless of authentication data provided by the device to the server. As such, the authentication data may be received, but ignored (i.e. not processed or evaluated) by the device.

In the method, the access parameter may be changed through a setting in a GUI on a display associated with the server; information relating to the access requests to the network received by the server device may be displayed on the GUI; and changing the access parameter to the second setting is performed through the setting in the GUI.

In the method, the setting may be changed by a user accessing the GUI; and the second setting may be changed by the user accessing the GUI.

In the method, the access parameter may be changed through accessing a default setting that the server accesses; the triggering event may provide a limit of client devices allowed to connect to the network through the server; and the second setting may be changed by accessing a second default setting that the server accesses.

In the method, access to the network may be controlled through 802.1X protocols; the first setting may disable the 802.1X protocols to allow the client device to connect to the network without conducting a security check. This system may simply authenticate the device. The second setting may enable the IEEE 802.1X to close an IEEE 802.1X port for the network to block accesses from a subsequent client device to access the network.

In a third aspect, a server device for managing access requests to a network received from a client device is provided. The server device comprises: a communication module to process communications of the network and the client device; and a connection management module. The connection management module sets an access parameter for accessing the network to a first setting; evaluates access requests to the network received by the server device using the first setting; and upon detection of a triggering event, changes the access parameter to a second setting.

In the server, the network may be an 802.11 network.

The server may further comprise a connection GUI management module that generates a GUI on a display of the server device providing a setting for the access parameter and information the access requests.

In the server the second setting may be set to not allow an additional device to access the network through the server device. As such, the setting may prohibit the additional device from accessing the network.

In the server the second setting may be set through the GUI.

In other aspects, various combinations of sets and subsets of the above aspects are provided.

The network may be wired or wireless. An exemplary wired network has a hub (such as a wired access point) that manages connections for wired and wireless devices. An exemplary wireless network has a wireless transceiver communicating with wireless devices. The transceiver generates through its antenna a transmission area for sending and receiving wireless transmissions. Devices enter the transmission area and communicate with the transceiver. Communications are generally sent from one device to the transceiver and then the transceiver then sends the communication to the intended second device. Communications with other devices in other networks are channelled through the transceiver, which has connections to other transceivers and other servers in the other networks. In certain networks, some communications may be sent directly between devices in the area.

For example, in a mobile hotspot Wi-Fi network, a mobile server (functioning as an access point ("AP") or hotspot) can be provided. An embodiment manages how clients access the hotspot. In a hotspot, a given wireless device acts as the server for a network. This server can allow other devices to connect to that device so that the other devices can obtain Internet access via the mobile network. One feature of an embodiment simplifies how those devices (e.g. laptops, mobile devices, computers, etc.) are provided access to the network by selectively setting/changing access parameters (e.g. user account names and passwords) for devices dynamically. Access parameters, such as password and user identification (userids) are cumbersome to remember and manage. Having access parameters is useful, as operating a hotspot without a password has risks to connection attempts from rogue devices. By dynamically setting/changing access parameters, an embodiment provides a device lockout regime that facilitates how / when / whether certain devices connect to the network, while later locking and/or restricting access to the network to restrict/prohibit access to the network by additional devices.

In one configuration for the network, the transceiver and the devices have a "server/client" relationship, where the transceiver is the "server" device for the area and the wireless devices are the "clients". In some networks, the server may be a fixed device, such as a wireless router directly connected to a physical wired Ethernet port in a network. The server operates as a node for the network and channels communications from the client devices intended for other devices in the network through the server device, acting as a node. Other networks may have a non-fixed server, such as another wireless device. For the purposes of convenience, and not limitation, the term "fixed" is used herein to describe a device that typically is not mobile, typically has a physical connection to its network (e.g. through an Ethernet port) and typically is powered by a power connection to a utility network (through a power cord). The term "non-fixed" is used herein to describe a device that typically is mobile, typically makes a wireless connection to its network and other devices and typically is powered by a self contained power source (e.g. through a battery). Any or all of such noted characteristics are not necessarily present for any fixed or non-fixed device. The phrase "server/clients" refers generally to devices that are related in some hierarchical network manner. Other phrases may be used to describe comparable device relationships for an embodiment, such as "master/slave", "network node/client", "access point/clients", etc.

Features of an embodiment may be more relevant for a non-fixed server, but principles can be applied to a fixed server device. Features of an embodiment can be provided in a remote device, such as another server, that communicates with the servers and clients through the network.

For fixed or non-fixed servers, an embodiment provides any one or more of three features that can operate independently of each other or in conjunction with one or more of the other features. First, an embodiment provides processes for changing access parameters to the network to facilitate entry to the network. Second, an embodiment provides processes to manage and / or monitor the number of devices that are accessing the network before and / or after the access parameters are changed. Third, an embodiment provides processes for changing access parameters to restrict entry to the network when a threshold condition has occurred. Other features may be provided.

Before discussing more details on the three features, a description is provided on a network having a device, as a server, that provides connections to other devices, as clients, according to an embodiment. Then, detail is provided on an exemplary wireless device related to an embodiment. Then, further detail is provided on connection management features related to controlling how, when and what devices can access the network.

To begin, details are provided on an exemplary network and devices in which an embodiment operates.

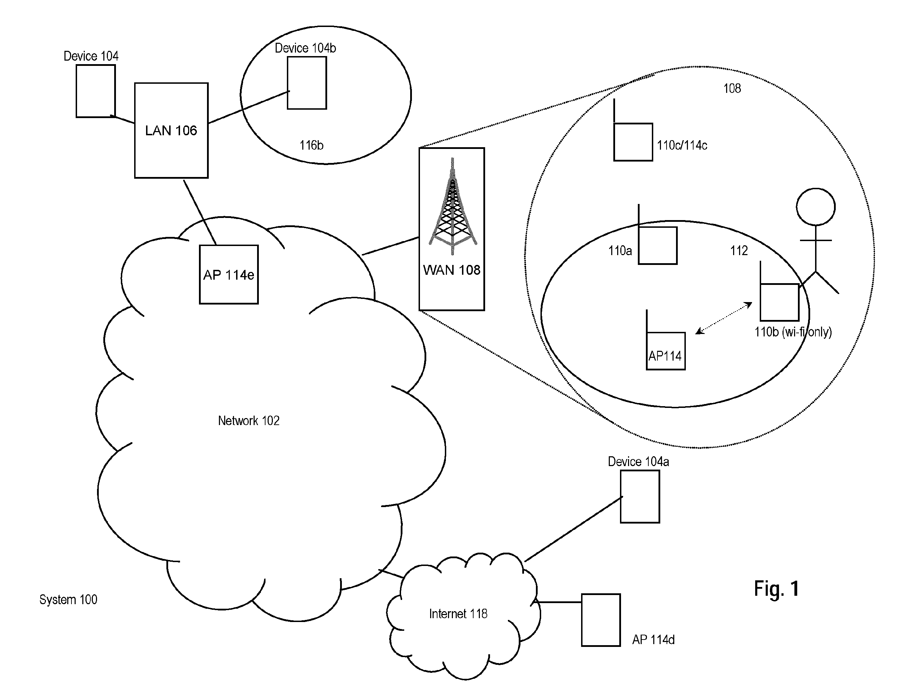

Referring to Fig. 1, details on a system of exemplary networks and communication devices according to an embodiment are provided. Fig. 1 shows communication system 100 where network 102 provides access to a suite of applications, services and data to its connected devices 104 through its associated servers. Network 102 can be implemented in any known architecture, providing wired and/or wireless connections to its elements. It will be appreciated that in other embodiments, various networks and subnetworks as described herein may be incorporated into other networks.

In network 102, one or more interface servers (not shown) provide hardware and software systems to allow network 102 to communicate with other networks. As part of a typical network architecture, these networks are organized following a layered model of network functions, such as an OSI model. As is known in the art, the OSI model defines seven layers where each layer controls functions of specific network/connection/applications. Some exemplary networks that are connected and connectable to network 102 are described.

Local area network (LAN) 106 is connected to network 102 and provides local wired and wireless connections to its devices 104 and 104b. Internet 118 may be connected to network 102.

A wireless network provides wireless communication coverage to devices that are located within the wireless transmission area of the WAN. In Fig. 1, one exemplary wireless network is a Wide Area Network (WAN) 108. Devices 110 have wireless communication capabilities with one or more wireless networks (described later). WAN 108 may have multiple transmission areas by having multiple communication towers. A WAN network can be provided by a cellular communications company, such as Verizon (trade-mark).

Network 112 is a Wi-Fi network generally following standards set by the IEEE LAN/MAN Standards Committee, known as IEEE 802, through its working group "11". The 802.11 standard defines media access control (MAC) and physical (PHY) layers in the OSI protocol model for WLAN. The family of 802.11 amendments is sometimes referred to as the 802.11x family. Currently, the 802.11 amendments encompass six wireless modulation techniques that all use the same communication protocol among their communicating elements. Other modulation techniques may be used. Current versions of 802.11 networks include: 802.11a, b, g and n, representing PHY amendments to IEEE 802.11. Specific transmission details and parameters of these networks and channels are known to those of skill in the art.

Wireless devices 110 communicate with each other through the data link layer in network 112. In an exemplary environment, network 112 is a local, geographically small, wireless network. Wireless devices 110 include handheld devices, cell phones and computers (either desktop or portable) having a (wireless) network card, network adapter and/or network interface controller ("NIC") installed therein.

Network 112 includes access point (AP) 114 and supporting radio transmission equipment known to those skilled in the art. In network 112, AP 114 is a communication device that contains an IEEE 802.11 radio receiver/transmitter (or transceiver) and functions as a bridge between network 112 and other networks (such as network 102, LAN 106 and/or network 108) for its carried communications. AP 114 provides data distribution services among devices 110 within network 112 and between devices 110 in network 112 and other devices in other connected networks. AP 114 may be a non-fixed wireless device, and as such AP 114 is effectively another wireless device 110. Functionalities for AP 114 may be provided in devices 110. For example, device 110c may have capabilities to be a Wi-Fi hotspot host and operate as AP 114c. As AP 114 is the data distribution point for network 112, it will be seen that the transmission area is centered on AP 114. As AP 114 moves (as it is a non-fixed device), its transmission area for network 112 will move with it. Other APs may be used as bridges for other networks. It will be seen that an AP is one form of a server device and that devices 110 are one form of client devices for a network. Other devices can be provided in the client/server relationship.

For an 802.11 network, a "station" is a basic component in the network. A station is any device that implements the functionality of an 802.11 protocol and has a connection to a wireless local area network. Typically, the 802.11 connection and communication functions are implemented in hardware and software and may be provided in a network connection circuit or system in a NIC at the station. A station may be any device, including a laptop computer, device 104, wireless device 110, or an AP 114. Stations may be mobile, portable, or stationary. All stations support the 802.11 station services of authentication, de-authentication, privacy, and data delivery. For the purposes of an embodiment as it relates to 802.11 standards, devices 110 may be considered to be stations.

A service set (SS) is defined as all devices (or stations) associated with a specific local or enterprise 802.11 wireless LAN(s). A service set identifier ("SSID") is a unique 32-character network name, or identifier, that is created and associated with a particular WLAN 112. A basic service set (BSS) is defined a single access point with all its associated stations. An Extended Service Set (ESS) is a set of one or more interconnected basic service sets and associated local area networks.

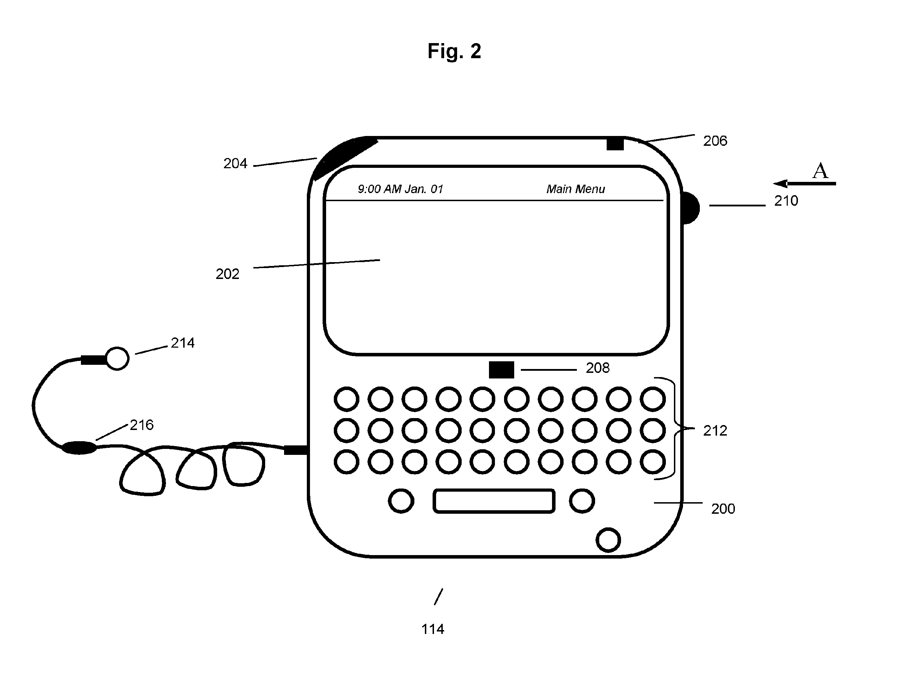

Now, further detail is provided on AP 114 in network 112. Fig. 2 provides general features of AP 114 (and/or device 110) in accordance with an embodiment of the disclosure. In the present embodiment, AP 114 / device 110 is based on a computing platform having functionality of an enhanced personal digital assistant with cellphone and e-mail features. It is, however, understood that AP 114 / device 110 can be based on construction design and functionality of other electronic devices, such as smart telephones, desktop computers, pagers or laptops having telephony equipment. In a present embodiment, AP 114 includes a housing 200, an LCD 202, speaker 204, an LED indicator 206, an input device 208 (which may be a trackpad, trackball, thumbwheel or other input device), an ESC ("escape") key 210, keypad 212, a telephone headset comprised of an ear bud 214 and a microphone 216. ESC key 210 can be inwardly depressed along the path of arrow "A" as a means to provide additional input to AP 114 / device 110.

It will be understood that housing 200 can be made from any suitable material as will occur to those of skill in the art and may be suitably formed to house and hold all components of AP 114 / device 110.

AP 114 / device 110 is operable to conduct wireless telephone calls, using any wireless phone system. Exemplary technologies for network 106 are any known wireless phone systems such as a Mobitex (trade-mark) network, a DataTAC (trade-mark) network, a General Packet Radio Service (GPRS) network and also a variety of voice communication networks, such as Advanced Mobile Phone Service (AMPS), Time Division Multiple Access (TDMA), Code Division Multiple Access (CDMA) system, wireless CDMA, CDMA 2000 system, Cellular Digital Packet Data (CDPD) system, Personal Communication Service (PCS), Global System for Mobile Communication (GSM), Wi-Fi networks, 3GPP Long Term Evolution (LTE) networks, etc. Other wireless phone systems that network 106 may support can include Wireless WAN (IMS), Wireless MAN (Wi-Max or IEEE 802.16), Wireless LAN (IEEE 802.11), Wireless PAN (IEEE 802.15 and Bluetooth), high-speed data packet access (HSDPA) networks, Evolved High Speed Packet Access (HSPA+) networks, etc. and any others that support voice. Additionally, a Bluetooth network may be supported. Other embodiments include Voice over IP (VoIP) type streaming data communications that can simulate circuit-switched phone calls. Device 110 may have capabilities of communicating with other devices using other communication technologies, including instant messaging (IM) systems, text messaging (TM) systems and short message service (SMS) systems. Ear bud 214 can be used to listen to phone calls and other sound messages and microphone 216 can be used to speak into and input sound messages to AP 114 / device 110.

AP 114 / device 110 is a microprocessor-controlled device (not shown). Software applications operating on AP 114 / device 110 control its operations and network connections to implement the above-noted three features. Further detail on selected applications for an embodiment is provided later.

AP 114 may operate as a dual-mode modem. Its mobile data communication functions allow it to make WAN connections and allow it to deliver voice and e-mails to user of AP 114. Its Wi-Fi connections (acting as a server) enable delivery of data to other devices 110 (e.g. a remote wireless device) simultaneously. Since wireless AP 114 is portable, it may move. As such, its wireless coverage for area 112 and devices 110 are dynamic, each independently potentially ranging from non-existent, to poor, to adequate, to good and to excellent (with values in-between). As such, overall throughput between wireless AP 114 and device 110 can depend on an instantaneous wireless signal quality of two PHY layers, namely a Physical Coding Sublayer (PCS) and a Physical Medium Dependent (PMD) layer. The PCS encodes and decodes the data that is transmitted and received.

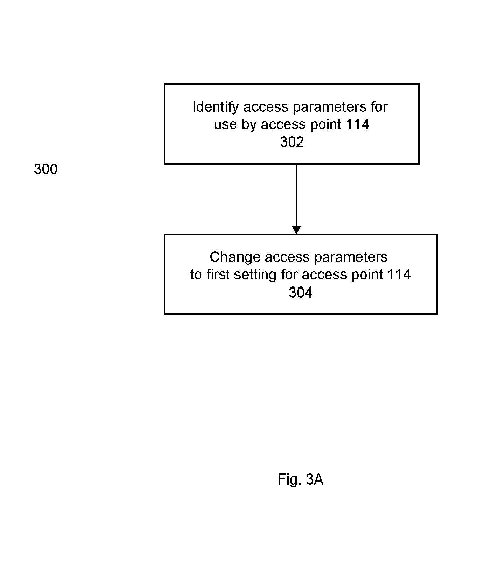

With some functions of AP 114 described, further detail is provided on connection management processes conducted by AP 114. Referring to Fig. 3A, process 300 shows an exemplary connection management algorithm operating on AP 114 (or for it). Process 300 toggles access parameters that devices 110 would use to connect to network 112 through AP 114.

To begin, process 302 identifies current access parameters that AP 114 uses to evaluate how devices 110 are authenticated to that AP 114. A current access parameter may consist of providing an acceptable password and / or userid. This process may be optional. The defaults settings for this parameter may be stored in AP 114 or may be provided to AP 114.

Access parameters can be based on defined protocols. For Wi-Fi networks, various password protocol regimes are defined by its standards body, the Wi-Fi Alliance. Wi-Fi Protected Access (WPA-Personal) and Wi-Fi Protected Access II (WPA2-Personal) are two Wi-Fi protocols and certification programs. The WPA-Personal protocol is based on the IEEE 802.11i standard. Digital keys for WPA are encoded as a string of 64 hexadecimal digits or generated from a passphrase of 8 to 63 printable ASCII characters. Wired Equivalent Privacy (WEP) is another security algorithm for IEEE 802.11 wireless networks, which predates WPA. WEP was part of the original 802.11 protocol in 1997. For example, WEP keys may be 40 bits long (in 64-bit WEP) or 104 bits long (in 128-bit WEP). Other protocols include WPA and WPA2 Enterprise. Also, the IEEE 802.1X protocol defines encapsulation of the Extensible Authentication Protocol (EAP) over IEEE 802.

Other access parameters may be used, which may not or may not be defined as part of a standardized regime, including queries to determine operating conditions on devices 110, including for example, their operating conditions and/or communication characteristics for network 112. For an identified device 110, exemplary conditions/characteristics can include one or more of the following parameters:
• Its MAC address and / or settings associated with its MAC address (or other connection addresses). A MAC address analysis (or other identification analysis) may identify characteristics of connection(s) for the devices 110. For example, the MAC addressed can be examined and the associated manufacturer may be identified;
• Its current power connectivity and/or battery capacity;
• Desired/required data transmission rate, transmission power levels and type of connection; and
• Expected maximum/minimum/desired connection time (e.g. 5/10/15/45/60/120+ etc. minutes).

Other criteria relating to a network connection, processing capabilities of device 110, current activity schedules and/or other factors. Other access parameters may be provided, such as maintaining a list of devices that are preauthorized to access the network through AP 114. Lists of devices can be maintained to track devices that can be provided access and devices are to be denied access. Such devices that are to be denied access may have deemed inappropriate performance issues (e.g. having requirements for too large amount of bandwidth or having wireless communications that are below a threshold transmission signal strength for AP 114, etc.).

At process 304, the access parameters may be changed and / or set (if they have not been set before). A change can be made to increase or decrease the level of security and / or information provided for the access parameter.

One embodiment provides options that lessen the restrictions for access, which facilitates ease of connecting to the network. For example, a typical access parameter is a requirement that device 110 provides a suitable password and / or userid to AP 114. To lessen the restrictions, the access parameter can be changed / set to having no password and / or userid requirements. As such, an embodiment may receive a password, but may not process it or may simply ignore it. As such, when this requirement is removed, any device that makes a connection request to network 112 through AP 114 does not have to provide the password and / or userid. Alternatively, different password / userid regimes can be implemented that have less stringent requirements than the previously operating access parameters (e.g. where a userid / password combination is a simple string, e.g. "account"/"password"). A password provisioning feature may be provided where AP 114 provisions a userid/password to device 112 for future associations. Thereafter security could be enabled. The provisioning of a userid/password can be provided through any protocol, such as an open mobile alliance (OMA) defined protocol.

For example, if the previous access parameters were governed by WPA2 protocols, a less stringent password parameter can be implemented, for example WEP protocols. Alternatively, a simple password interface may be provided that provides a simple password and / or userid requirements. For example, a graphical user interface (GUI) may be provided requesting that the user complete a password and / or userid fields. The password/userid values can be set to an easy-to-remember combination, such as "guest/password". The combination may be displayed on the GUI to assist with the retention of the password by the user, while still providing at interface for providing passwords.

The access parameter may relate to operating conditions, limitation and / or characteristics of a device 110. For example, a device 110 may be required to have a certain amount of available memory, a minimum transmission signal strength with AP 114, and / or a maximum bandwidth requirement, etc. The conditions may be related to physical constraints of device 110 (e.g. based on its memory capability, processing capability, etc.).

Another embodiment provides options that increase the restrictions for access, which enhances security features for the network. For example, if previous access parameters were governed by WEP protocols, a more stringent password parameter may then be implemented. Non-standardized parameters (e.g. non-802.11 based parameters) may also be provided.

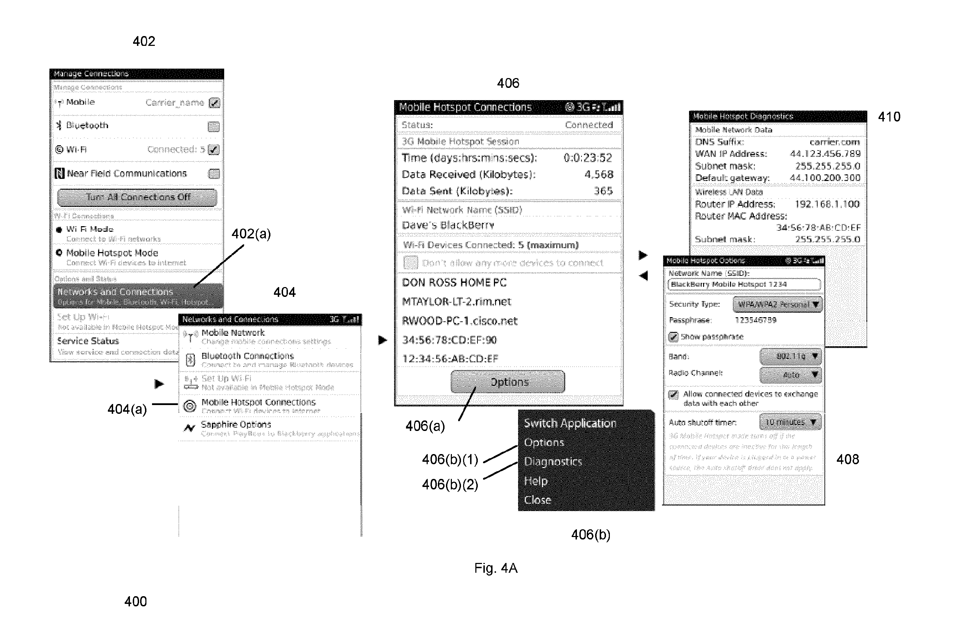

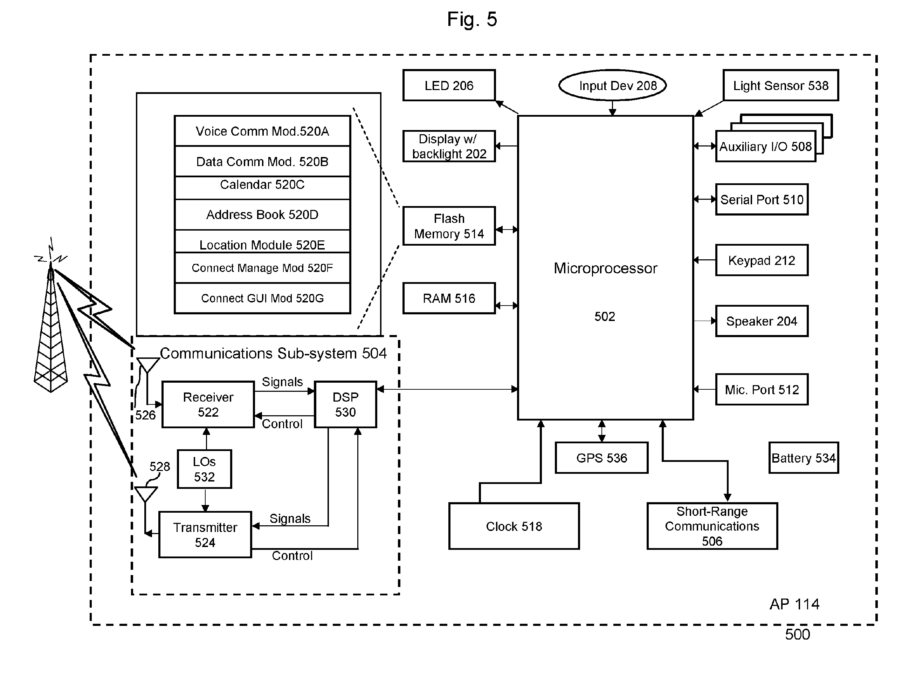

Referring to Fig. 4A, screen history 400 shows a series of GUIs generated on AP 114 as access parameters to its network are changed. Updates to devices 110 that have been provided access to network 112 through AP 114 is provided through GUIs 402, 404, 406, 408 and 410 generated on its display. From a basic network management screen, GUI 402 is generated providing a list of network and network connections that can be managed. Activation of selection 402(a) causes generation of GUI 404 which provides a list of connections that can be managed. Activation of selection 404(a) for mobile hot spot connections causes generation of GUI 406 which provides a list of devices that are connected to AP 114. Activation of the "Options" button 406(a) causes GUI 408 to be generated which provides a list of option connections that can be managed. Alternatively, activation of a "menu" input button (e.g. input device 208, Fig. 2) on AP 114 causes generation option bar 406(b) providing a list of options that can be changed. Activation of "options" selection 406(b)(1) of option bar 406(b) causes Activation of "options" selection 406(b)(2) of option bar 406(b) causes GUI 410 to be generated which provides a list of diagnostics relating to the network connection. The GUIs provide information on the current access parameters and options for changes to the parameters. The user of AP 114 would select from the GUI the desired change to the access parameters. Once selected, underlying processes operating on AP 114 implement the changes. A notification screen may be generated on AP 114 indicating the change in the parameters. In one embodiment a change to an access parameter is implemented in a connection management module (Fig. 5) operating on AP 114, described below.

Now, the second feature of an embodiment is described in more detail. In particular, details are provided on how an embodiment monitors for access requests received by AP 114 after access parameter is set/changed (per Fig. 3A).

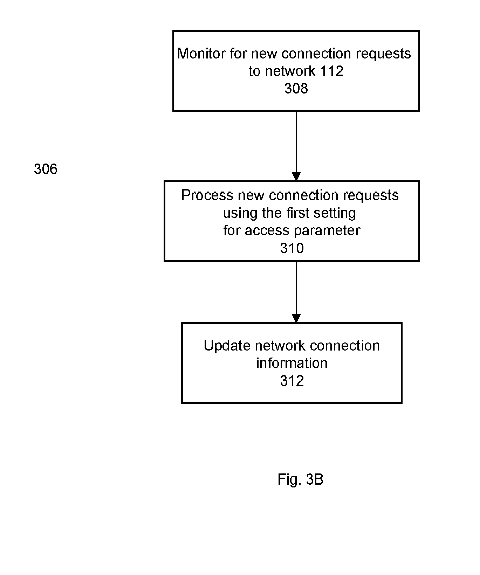

Referring to Fig. 3B, process 308 shows an exemplary connection monitoring algorithm operating on AP 114 (or for it) that determines the current state of connected devices 110 to AP 114.

Once the access parameters are changed, devices 110 that subsequently make a connection request (e.g. through an authentication, association and / or probe request in a Wi-Fi network) are received by AP 114 and that connection request is evaluated under the newly changed access parameters. It can be seen that checking for access parameters may be triggered after connected devices 112 are provisioned with credentials. This would provide a secure and restricted network 110. At process 308, an embodiment monitors for new connection requests to network 112 received by AP 114.

At process 310, a new connection request is evaluated using the first setting for access parameter set/changed in the process for Fig. 3A (or set/changed elsewhere). For example, consider a configuration where the previous a security protocol implemented access parameters consisting of userid/password conforming to either from WPA2, WPA or WEP protocols. In one embodiment, the changed access parameters are to disable such password requirements. As such, password data may not be provided by the device and / or if such password data is provided, it may be disregarded or ignored.

Accordingly, when a subsequent device 110 makes an authentication request to access the Wi-Fi network, for an embodiment that disables password requirements, when the security passwords are disabled, AP 114 does not perform any userid/password matching per the previously enabled security protocol. As such, access to the network 112 for the new device 110 is provided by AP 114 without conducting such a check.

In a Wi-Fi network, communications between AP 114 and device 110 are encoded in standardized "frames" of data. Management frames are one class of frames used to establish and maintain communications between AP 114 and device 110. Within management frames, authentication frames are one type of frame that device 110 uses to initiate a connection request. In Wi-Fi protocols, authentication is a process where AP 114 either accepts or rejects the credentials (e.g. username and/or password) of device 110. Device 110 begins authentication by generating and sending an authentication frame containing its identity to AP 114. AP 114 is expected to respond with an authentication frame indicating acceptance (or rejection) of the authentication frame. If shared key authentication is (or had been) expected by device 110, device 110 would first send an initial authentication frame. For an exemplary authentication protocol, AP 114 is expected to respond with an authentication frame containing challenge text. Device 110 is then expected to send an encrypted version of the challenge text (using its key) in an authentication frame to AP 114. AP 114 would evaluate whether device 110 has the correct key by determining whether or not the challenge text recovered after decryption is the same that was sent previously. From this analysis, AP 114 provides a response to device 112 with an authentication frame signifying the result of authentication. Accordingly, if the first access parameter is set so that WPA2, WPA and WEP authentication protocols are disabled, then AP 114 may reply to an authentication frame from device 110 with a frame indicating acceptance of the initial request and / or approval of any challenge text, if provided in a subsequent authentication frame by device 110, regardless of whether or not a proper match was provided. As such AP 114 may disregard, not process or ignore any authentication data provided by device 110. Generally, in Wi-Fi networks, once a setting is made for WPA2 (e.g. either to check or to not check for passwords), the setting cannot be changed. A reset of AP 114 would be required. However, other embodiments, including future versions of Wi-Fi networks, may allow dynamic changes to be made to a WPA2 setting without requiring a reset of AP 114.

Other types of management frames can be used to transmit status and data between entities. Association frames are a second class of frames. Association allows AP 114 to allocate resources for and synchronize with device 110. Following an authentication request, device 110 initiates an association process by sending an association request to AP 114. AP 114 would process the request and send an association response frame containing an acceptance or rejection notice to device 110. If AP 114 accepts device 110, device 110 can connect to network 112 through AP 114. As such AP 114 will either accept or deny access to network 112 for device 110 depending on whether or not "new" devices are to be accepted into network 112. Probe frames are another class of frames. Other classes of frames may also be used to transmit status and data between entities. Other messaging protocols outside of the Wi-Fi standard protocols may also be used.

Alternatively, a different check may be implemented. Once access is granted to device 110 (either because no security check was performed or because device 110 provided proper access parameters for the new security regime), an appropriate acknowledgement and access reply is provided by AP 114 to the new device. The access parameters may be related to identification information associated with the requesting device (e.g. MAC address information). AP 114 may have, or may have access to, MAC information in a database to a set of devices that are approved to access network 112. When a new device 110 makes a connection request, AP 114 may request or determine the MAC address (or other information) from device 110. When that information is received, AP 114 can determine whether device 110 can be provided access to network 112. As noted, the access parameters can be changed to different requirements. Alternatively still, the check may provide a wider tolerance of accepted values from the expected values.

At process 312, an embodiment can update a GUI with information about any additional devices 110 that are provided access to network 110 through AP 114 in process 308. This reporting may be optional.

Referring to Fig. 4A, screen shot 406 shows the number of current devices 110 connected to AP 114. This value may be updated periodically. A user of AP 114 may access this screen as needed. Reporting of the connections may be provided in a background GUI and / or a specific icon may be generated on the display of device AP 114 providing a quick status of the number of connecting devices 110.

Now, the third feature of an embodiment is described in more detail. In particular, details are provided on how an embodiment subsequently changes an access parameter once a trigger condition is detected.

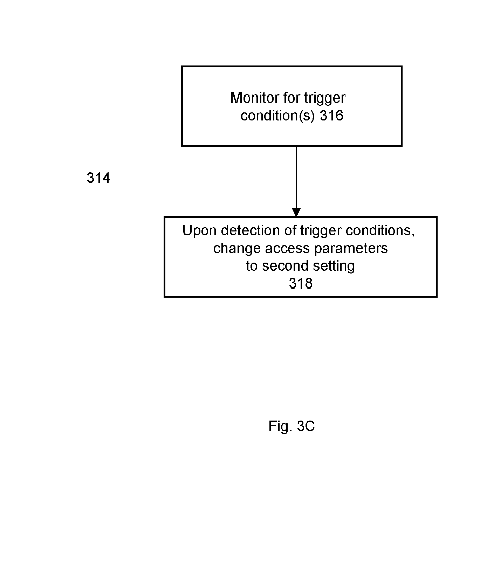

Referring to Fig. 3C, process 314 shows an exemplary algorithm that provides another change to an access parameter being used by AP 114 (or for it). As noted in process 314, an embodiment monitors the current number of devices 110 that are connected to its network.

As part of the third feature, as AP 114 is operating in network 112, operating environment conditions may change through any combination of internal or external factors. An embodiment provides for setting of a trigger condition relating to an operating condition. When the trigger condition is satisfied, the access parameters can be changed (again) for AP 114. The trigger condition may include reaching a maximum number of devices that are connected to AP 114, an elapsed time for the previously changed access parameter, detection of a change in the operating conditions of network 110, detection of security violation for network 110 (e.g. detection of a rogue access request), operating conditions of AP 114 (e.g. change in signal strength to network 110, low battery level, etc.). The trigger condition may be a combination of one or more of the above noted conditions. A tiered set of conditions can be implemented. The above noted conditions may be detected by AP 114 through processes operating on it. Alternatively or additionally, data relating to these conditions may be provided to AP 114 for processing. Alternatively, still, a manual monitoring of these conditions can be provided. For example, data relating to these conditions may be displayed on a GUI on AP 114. A user of AP 114 may manually monitor these conditions through the GUI and when the user determines that a trigger condition has occurred, the user may manually change the access parameter.

Per process 316, trigger conditions can be monitored. Per process 318, upon detection of a trigger condition, the access parameters are changed. A change can be made to prohibit access entirely or to increase or decrease the level of security and / or information provided for the access parameter. Alternatively or additionally a different access parameter may be activated, which is not related to the access parameter. For example, if the first access parameter relates to a first security protocol, the second access parameter can be a protocol that is not related to the first security protocol. The second access parameter may be related to an operating condition of the device (e.g. battery power, distance from AP 114, etc.). The parameters may be switched. There may be a default setting provided for the parameter and the default setting may change upon certain trigger conditions. As such, in one embodiment, the access parameter is changed through accessing the default setting that the server accesses. After the parameter is set, the default setting may be changed upon an external or internal event. Upon the detection of a triggering event, the access parameter may be changed (i.e. updated) by accessing the default setting again, which now has a second value.

In one embodiment, a change to the access parameter is to prohibit all future access requests. In such an embodiment, the set of connected devices 110 is closed and further new connection requests to AP 114 are denied. In one embodiment, when network 112 is closed and a subsequent device 110 sends an authentication frame containing its identity to AP 114, AP 114 responds with an authentication frame indicating rejection of the authentication frame. Similarly, if the subsequent device 110 sends an association frame to AP 114, AP 114 responds with a response association frame that denies the association, thereby blocking device 110 from network 112.

As such, in one embodiment an administrator for AP 114 is prevented from toggling access to network 110. This configuration lessens confusion as to whether or not a lockout feature is engaged: once the network is closed to new entrants, it is permanently closed until AP 114 is reset. As such, the setting prohibiting new devices is fixed. As such, when changes to the scope of devices 110 that are connected to network 112 are desired, it is necessary to reset of AP 114 (either as a hard or soft reset). When AP 114 is reset, devices 110 can then initiate re-connection requests to AP 114.

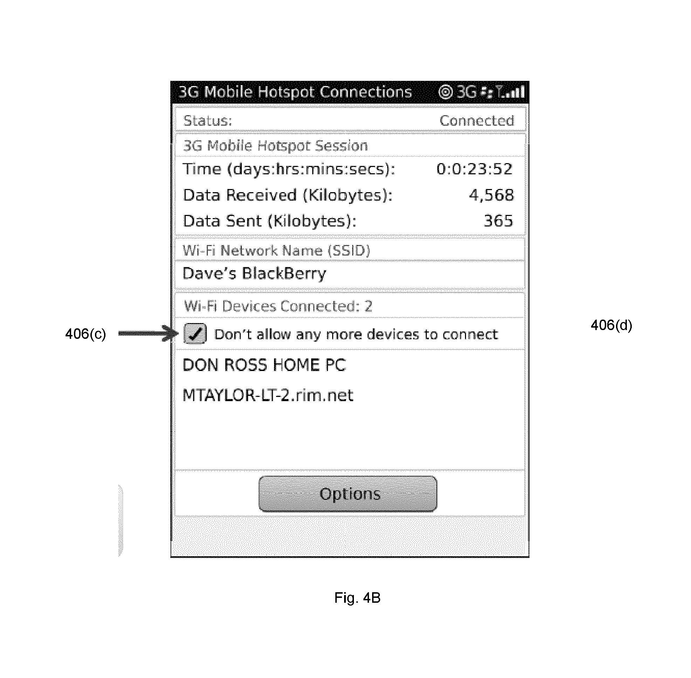

Per Fig. 4B, screen 406 shows option 406(c) which allows toggling of a control to allow or not allow further devices 110 to connect to AP 114. A manual "checking" of the associated box by a user accessing screen 406 causes a process operating on AP 114 to not permit any more connection requests to AP 114. One embodiment that provides this function is the connection management module (Fig. 5), described below. Also, as an option, when a maximum number of devices 110 has been detected, box 406(c) may be deactivated and shown in grey, as no more devices are allowed to connect to AP 114. As such, new connections are prohibited.

In another embodiment, if the change is to increase/decrease the authentication level, then when a subsequent device 110 sends its initial 802.11 authentication frame, AP 114 would respond with an authentication frame containing challenge text following the second access parameters. Device 110 is then expected to send an encrypted version of the challenge text (using its key) in an authentication frame to AP 114. AP 114 would evaluate whether device 110 has the correct key for the changed access parameters. From this analysis, AP 114 provides a response to device 112 with an authentication frame signifying the result of authentication. Accordingly, if the first access parameter had access parameters disabled and the second access parameter re-sets or changes the parameters so that WPA2, WPA and WEP authentication protocols are used, then AP 114 may reply to an authentication frame from device 110 with a frame providing the appropriate challenge text. Other non-standard access parameters may be implemented as described herein.

It will be seen that by changing access requirements to eliminate requirements for passwords and / or userids and subsequently locking out subsequent devices from the network, a simple and easy-to-remember network management process for a user of AP 114 is provided. Further, as noted above, use in one embodiment of a manual checking of option 406(c) (Fig. 4B) to lock out new devices provides the user of AP 114 with a quick method of limiting the size of the network participants. This manual lock-out precludes the user of AP 114 from having to set thresholds for a number of devices to be allowed to access network 112 in a setting in AP 114. However, in other embodiments, having a setting that will automatically be reviewed by processes in AP 114 without manual monitoring by the user of AP 114 may be useful. One scenario where the access parameters and subsequent network lock out feature described in this paragraph may be useful is where AP 114 is located in an environment where a user has a fair degree of comfort in the security of possible devices 110 that would be accessing AP 114. For example, in a moving car, a user of AP 114 may want to provide access to network 112 to other persons in the car. The user of AP 114 would have some degree of comfort in the security and / or identification of the other devices 112 in the car. As such, AP 114 can take a calculated risk that it will turn off security parameters for its network 112, allow the devices 110 in the car to make requests to connect and provide access to the devices 110 without any security clearance measures and then lock-out new access requests, once all of the "known" devices 110 in the car have accessed network 112 through AP 114.

Again, per Fig. 4A, GUIs generated on AP 114 provide information on the current access parameters for AP 114. A notification screen may be generated on AP 114 indicating the change in the parameters.

In other embodiments, other processes and/or methods may be implemented to control access of devices 110 to a Wi-Fi network 112. Some exemplary embodiments are noted below.

One network access control embodiment can first enable WPS and then use the WPS registrar to assess/reject future connection/configuration requests received from devices 110.

Another embodiment provides network access control that can utilize provisions provided in the IEEE 802.1X protocol. For example, initially, IEEE 802.1X protocols would be disabled, which would only authenticate devices 110 as they connected to network 112 with no security checks being conducted, thereby allowing devices 110 to connect automatically with network 112 through AP 114. After devices 112 have been associated with network 112, IEEE 802.1X protocols would then be enabled. This has the effect of closing the IEEE 802.1X port for network 112 and blocks accesses from other devices 110 (both wired and wireless devices) attempting to access network 110. In this configuration, an authentication server for devices 110 may not need to be used.

Yet another embodiment provides network access control that can utilize provisions provided in the IEEE 802.1X protocol with security features and that allow devices 110 to associate with network 112 through AP 114. After devices 110 have been associated with network 112, the embodiment would force connected devices 110 to initiate a certificate enrolment. This can be done via a protocol like a Simple Certificate Enrolment Protocol (SCEP) to force execution of an EAP method for certificate authentication.

Still another embodiment provides network access control that can implement a "lightweight" server, such as a webserver, for network 112 that provides a captive portal for AP 114. After devices 110 have been allowed to associate with AP 114 and network 110, AP 114 can place new associations (with unknown MAC addresses) in a "captive portal" and then force devices 110 to authenticate with AP 114 using a userid/password to process their authentication.

Another embodiment provides network access control that can utilize WPS to distribute unique keys to each device 110. The keys can be related to the MAC addresses of devices 110. As such, AP 114 has a key that can be used and accessed to identify and / or verify each device 110 uniquely. This key can be used to restrict access to network 112 to only those devices 110 that have been authorized to access network 112.

Any of the five exemplary access control embodiments noted above may be implemented in any further embodiment depending on implementing features desired. Different techniques have different operating characteristics. The techniques utilizing WPS protocols are simple to implement and manage. The techniques utilizing 802.1X protocols have a higher degrees of network security.

In other embodiments, the changed access parameter may relate to operating conditions and / or characteristics of a device 110. For example, a device 110 may be required to have a certain amount of available memory, a minimum transmission signal strength with AP 114, and / or a maximum bandwidth requirement, etc.

In other embodiments, the access parameter may be changed to implement a more strict access requirement. For example, if the current access parameters removed password and / or userid requirements, the access parameters can be reverted to the earlier access parameters (e.g. WPA2 or WEP). The GUIs provide information on the current access parameters and options for changes to the parameters. The user of AP 114 would select from the GUI the desired change to the access parameters. Once selected, underlying processes operating on AP 114 implement the changes. A notification screen may be generated on AP 114 indicating the change in the parameters. It will be appreciated that the displayed information in the GUIs shown in Figs. 4A and 4B may be collected into one or more groups of GUIs or may be provided in a single GUI. The term "GUI" used herein can mean a single GUI or a series of GUIs.

With aspects of the three main features of an embodiment described, further detail is now provided on internal components in AP 114.

Referring to Fig. 5, functional components of AP 114 / device 110 are provided in schematic 500. The functional components are generally electronic, structural or electromechanical devices. In particular, microprocessor 502 is provided to control and receive almost all data, transmissions, inputs and outputs related to AP 114 / device 110. Microprocessor 502 is shown schematically as coupled to keypad 312 and other internal devices. Microprocessor 502 preferably controls the overall operation of AP 114 / device 110 and its components. Exemplary microprocessors for microprocessor 502 include microprocessors in the Data 950 (trade-mark) series, the 6200 series and the PXA900 series, all available at one time from Intel Corporation. Microprocessor 502 is connected to other elements in AP 114 / device 110 through a series of electrical connections to its various input and output pins. Microprocessor 502 has an IRQ input line which allows it to receive signals from various devices and modules. Appropriate interrupt firmware is provided which receives and reacts to the signals detected on the IRQ line. An interrupt signal may be used to indicate a request to terminate the segmented scanning mode of an embodiment.

In addition to the microprocessor 502, other internal devices of AP 114 / device 110 are shown schematically in Fig. 5. These include: display 202; speaker 204; keypad 212; communication sub-system 504; short-range communication sub-system 506; auxiliary I/O devices 508; serial port 510; microphone port 512 for microphone 216; flash memory 514 (which provides persistent storage of data); random access memory (RAM) 516; clock 518 and other device sub-systems (not shown). Device 110 is preferably a two-way radio frequency (RF) communication device having voice and data communication capabilities. In addition, device 110 preferably has the capability to communicate with other computer systems via the Internet.

Operating system software executed by microprocessor 502 is preferably stored in a computer-readable medium, such as flash memory 514, but may be stored in other types of memory devices, such as read-only memory (ROM) or similar storage element. In addition, system software, specific device applications, or parts thereof, may be temporarily loaded into a volatile store, such as RAM 516. Communication signals received by the mobile device may also be stored to RAM 516.

In addition to an operating system operating on AP 114 / device 110, additional software modules 520 enable execution of software applications on AP 114 / device 110. A set of software (or firmware) applications, generally identified as applications 520, that control basic device operations, such as voice communication module 520A and data communication module 520B, may be installed on AP 114 / device 110 during manufacture or downloaded thereafter. As well, other software modules are provided, such as calendar module 520C, address book 520D and location module 520E.

Messages received and/or generated by any module 520 may be processed by data communications module 520B. Messages may be transmitted / received in network layer communications, emails, and / or other messaging systems to network 112 and / or devices 110. Module 520B receives messages from external devices 110, extracts relevant information from them and provides the information to relevant modules (such as CMM 520F). Module 520B notifications from modules 520 (such as connection management module 520F and connection GUI module 520G), extracts relevant information from them and generates and sends messages containing relevant information to the messages to network 112, including to devices 110. Messages relating to network 112 for device 110, when operating as an AP are processed separately by the modules from other non-network 112 communications (e.g. cellular communications) processed by device 110.

Connection management module (CMM) 520F is software and / or firmware that controls how and when connection requests for potential clients for AP 114 are evaluated per Fig. 3A. Communications and data are streamed through either communication module 504 or 506. CMM 520F may also receive signals from other modules providing information to it on other modules that are using communication module 504 or 506. Any access parameter that is set by an embodiment is evaluated by CMM 520F. Data relating to the access parameters provided by data from AP 114, network 110 and / or device 112. Processes to evaluate and authenticate connection requests from devices 112 can be provided in CMM 520F.

Connection GUI module (CGM) 520G is software and/or firmware that provides GUIs in generating display screens on display 302 of AP 114, such as screens shown in Fig. 4A and 4B. GUIs that receive data and access parameter settings from input screens is processed by CGM 520G and is provided to other modules, such as CMM 520F.

Additional modules such as personal information manager (PIM) application may be provided. Any module may be installed during manufacture or downloaded thereafter into AP 114 / device 110.

Data associated with each application, the status of one or more networks, profiles for networks and trigger conditions for commands for networks can be stored and updated in flash memory 514.

Communication functions, including data and voice communications, are performed through the communication sub-system 504 and the short-range communication sub-system 506. Collectively, sub-systems 504 and 506 provide the signal-level interface for all communication technologies processed by device 110. Various applications 520 provide the operational controls to further process and log the communications. Communication sub-system 504 includes receiver 522, transmitter 524 and one or more antennas, illustrated as receive antenna 526 and transmit antenna 528. In addition, communication sub-system 504 also includes processing modules, such as digital signal processor (DSP) 530 and local oscillators (LOs) 532. The specific design and implementation of communication sub-system 504 is dependent upon the communication network in which AP 114 / device 110 is intended to operate. For example, communication sub-system 504 of AP 114 / device 110 may on network technologies described earlier (e.g. GPRS, 802.11 network, Bluetooth networks, AMPS, TDMA, CDMA, CDMA 2000, PCS, GSM, WWAN, WMAN, WLAN, WPAN (Bluetooth), IM, TM, SMS, etc.).

Short-range communication sub-system 506 enables communication between device 110 and other proximate systems or devices, which need not necessarily be similar devices. For example, the short-range communication sub-system may include an infrared device and associated circuits and components, a Wi-Fi or a Bluetooth (trade-mark) communication module to provide for communication with similarly enabled systems and devices. Sub-system 506 may have one or more inputs or outputs to sub-system 504 in processing signals for its networks.

In addition to processing communication signals, DSP 530 provides control of receiver 526 and transmitter 524. For example, gains applied to communication signals in receiver 526 and transmitter 524 may be adaptively controlled through automatic gain-control algorithms implemented in DSP 530. One particular operational aspect of receiver 522 and antenna 526 is that they need to be tuned to receive signals in the 802.11 network bands, e.g. signals in the 2.4 GHz to 5.8 GHz range for sub-systems 506 and if needed, sub-system 504. Additional filters on antenna may also be used to provide such functionality.

Receiver 522 and antenna 526 provide at least some of the hardware and software elements needed to detect when AP 114 / device 110 is in the presence of communication signals from networks 108 and 110, thereby enabling AP 114 / device 110 to communication with other devices in networks 108 and 110.

Powering the entire electronics of the mobile handheld communication device is power source 534. In one embodiment, the power source 534 includes one or more batteries. In another embodiment, the power source 534 is a single battery pack, especially a rechargeable battery pack. A power switch (not shown) provides an "on/off' switch for AP 114 / device 110. A power source interface (not shown) may be provided in hardware, firmware, software or a combination of such elements to selectively control access of components in AP 114 / device 110 to power source 534. Upon activation of the power switch an application 520 is initiated to turn on device 110. Upon deactivation of the power switch, an application 520 is initiated to turn off device 110. Power to AP 114 / device 110 may also be controlled by other devices and by software applications 520.

AP 114 / device 110 may also have global positioning system (GPS) 536 to assist in identifying a present location of device 110 and may also have light sensor 538 to provide data on the ambient light conditions for device 110.

Although an embodiment has been described in terms of identifying/maintaining server/client device hierarchies in a wireless network, such as an 802.11 network, the features of an embodiment can be provided in coordinate aspects of different connections among different devices in different networks.

It will be appreciated that CMM 520F, CGM 520G and other modules in the embodiments can be implemented using known programming techniques, languages, processes and algorithms. Although the modules, processes and applications described are implemented in AP 114, it will be appreciated that some functions of the modules may be provided in a separate server that is in communication with AP 114 and / or devices 110. The titles of the modules are provided as a convenience to provide labels and assign functions to certain modules. It is not required that each module perform only its functions as described above. As such, specific functionalities for each application may be moved between applications or separated into different applications. Modules may be contained within other modules. Different signalling techniques may be used to communicate information between applications using known programming techniques. Known data storage, access and update algorithms allow data to be shared between applications. It will further be appreciated that other applications and systems on device 110 may be executing concurrently with other modules. As such, any of modules 520 (or parts thereof) may be structured to operate in as a "background" application on AP 114, using programming techniques known in the art.

It will be appreciated that the embodiments relating to client devices, server devices and systems may be implemented in a combination of electronic modules, hardware, firmware and software. The firmware and software may be implemented as a series of processes, applications and/or modules that provide the functionalities described herein. The modules, applications, algorithms and processes described herein may be executed in different order(s). Interrupt routines may be used. Data may be stored in volatile and non-volatile devices described herein and may be updated by the modules, applications, hardware, firmware and / or software.

As used herein, the wording "and / or" is intended to represent an inclusive-or. That is, "X and / or Y" is intended to mean X or Y or both.

In this disclosure, where a threshold or measured value is provided as an approximate value (for example, when the threshold is qualified with the word "about"), a range of values will be understood to be valid for that value. For example, for a threshold stated as an approximate value, a range of about 25% larger and 25% smaller than the stated value may be used. Thresholds, values, measurements and dimensions of features are illustrative of embodiments and are not limiting unless noted. Further, as an example, a "sufficient" match with a given threshold may be a value that is within the provided threshold, having regard to the approximate value applicable to the threshold and the understood range of values (over and under) that may be applied for that threshold.

The present disclosure is defined by the claims appended hereto, with the foregoing description being merely illustrative of embodiments of the disclosure. Those of ordinary skill may envisage certain modifications to the foregoing embodiments which, although not explicitly discussed herein, do not depart from the scope of the disclosure, as defined by the appended claims.

## Claims

1. A method of managing access requests to a network from a client device received by a server device, said method comprising:
setting or changing an access parameter for accessing said network to a first setting;
evaluating access requests to said network received by said server device using said first setting; and
upon detection of a triggering event, changing said access parameter to a second setting.

2. The method of managing access requests to a network from a client device received by a server device as claimed in claim 1, wherein:
said network is an 802.11 class network; and
said server device is a wireless device.

3. The method of managing access requests to a network from a client device received by a server device as claimed in claim 1 or claim 2, wherein:
said first setting allows access to said network without requiring that a password be provided by said client device.

4. The method of managing access requests to a network from a client device received by a server device as claimed in claim 3, wherein:
when evaluating said access requests, said server device grants said client device access to said network and disregards authentication data provided by said client device to said server device.

5. The method of managing access requests to a network from a client device received by a server device as claimed in any preceding claim, wherein:
(a) said second setting prohibits an additional device from accessing access said network through said server device; or
(b) said second setting prohibits an additional device from accessing said network through said server device, and wherein said second setting is fixed until a reset of said server device.

6. The method of managing access requests to a network from a client device received by a server device as claimed in claim 1, wherein:
said second setting evaluates a password provided as part of a subsequent access request from said client device requesting access to said network through said server device.

7. The method of managing access requests to a network from a client device received by a server device as claimed in any preceding claim, wherein:
(a) said triggering event is reaching a predetermined limit of client devices accessing said network through said server device; or
(b) said triggering event is reaching of an elapsed time from when said first setting was set.

8. The method of managing access requests to a network from a client device received by a server device as claimed in any preceding claim, wherein:
said access parameter is changed through a setting in a graphical user interface (GUI) on a display associated with said server device;
information relating to said access requests to said network received by said server device is displayed on said GUI; and
changing said access parameter to said second setting is performed through said setting in said GUI.

9. The method of managing access requests to a network from a client device received by a server device as claimed in claim 8, wherein:
said first setting is changed by a user accessing said GUI; and
said second setting is changed by said user accessing said GUI.

10. The method of managing access requests to a network from a client device received by a server device as claimed in claim 2, wherein:
said access parameter is changed through accessing a default setting that said server device accesses;
said triggering event provides a limit of client devices allowed to connect to said network through said server device; and
said second setting is a second default setting that said server device accesses.

11. The method of managing access requests to a network from a client device received by a server device as claimed in claim 2, wherein:
access to said network is controlled through 802.1X protocols;
said first setting disables said 802.1X protocols to allow said client device to connect to said network without conducting a security check; and
said second setting enables said IEEE 802.1X to close an IEEE 802.1X port for said network to block accesses from a subsequent client device to access said network.

12. A server device for managing access requests to a network received from a client device, said server device comprising:
a communication module to process communications of said network and said client device; and
a connection management module to
set an access parameter for accessing said network to a first setting;
evaluate access requests to said network received by said server device using said first setting; and
upon detection of a triggering event, change said access parameter to a second setting.

13. The server device for managing access requests to a network received from a client device as claimed in claim 12, wherein said network is an 802.11 network.

14. The server device for managing access requests to a network received from a client device as claimed in claim 13, further comprising:
a connection graphical user interface (GUI) management module to generate a GUI on a display of said server device providing a setting for said access parameter and
information said access requests.

15. The server device for managing access requests to a network received from a client device as claimed in claim 14, wherein:
said second setting prohibits an additional device to access said network through said server device.
